Europäisches Patentamt

European Patent Office

Office européen des brevets

(11) Numéro de publication: **0 408 415 A1**

# DEMANDE DE BREVET EUROPEEN

(21) Numéro de dépôt: **90401872.8**

(22) Date de dépôt: **28.06.90**

(51) Int. Cl.⁵: **B60N 2/28**

(30) Priorité: **06.07.89 FR 8909096**

(43) Date de publication de la demande:
**16.01.91 Bulletin 91/03**

(84) Etats contractants désignés:
**BE DE ES GB IT NL SE**

(71) Demandeur: **BABY RELAX Société en nom collectif**
**2, rue Balzac**
**F-75008 Paris(FR)**

(72) Inventeur: **Deloustal, Bernard**
**Lotissement Majouran**
**F-64390 Sauveterre de Bearn(FR)**

(74) Mandataire: **Orès, Bernard et al**
**Cabinet ORES 6, Avenue de Messine**
**F-75008 Paris(FR)**

(54) **Dispositif de siège auto pour enfant et son procédé de fabrication.**

(57) Dispositif de siège auto pour enfant comportant une coque en matière plastique, un rembourrage de ladite coque formant une surface d'assise, un dossier et des accoudoirs donnant à l'ensemble une structure en "baquet" avec, le cas échéant, un harnais de sécurité pour le maintien de l'enfant sur le dispositif et des moyens de fixation de ce dernier sur un support comme la banquette arrière d'un véhicule automobile.

La coque (11) renferme une armature métallique (17) conformée pour régner au moins dans la zone haute du dossier (13) et à l'avant de la surface d'assise (16) où elle ménage des moyens (25) avec lesquels sont propres à coopérer, respectivement, le brin baudrier (BB) et le brin sous-abdominal (BA) d'une ceinture de sécurité (C) du véhicule automobile pour l'immobilisation du dispositif (10) sur la banquette (B) équipée de ladite ceinture de sécurité.

FIG.1

## DISPOSITIF DE SIEGE AUTO POUR ENFANT ET SON PROCEDE DE FABRICATION

L'invention a pour objet un dispositif de siège auto pour enfant et son procédé de fabrication.

On connaît déjà des sièges auto pour enfant du type "baquet" constitués par une coque de matière plastique garnie d'un rembourrage formant une surface d'assise, un dossier et des accoudoirs, avec un piétement en tube métallique ou en plastique injecté ou soufflé par l'intermédiaire duquel le dispositif est posé sur un siège ou une banquette du véhicule automobile. Pour le maintien d'un enfant sur un tel dispositif de siège celui-ci comprend généralement un harnais a sangles et, dans certaines réalisations de la Demanderesse (FR-A-87 1818), des moyens sont également prévus sur le piétement du dispositif pour son immobilisation simple sur la banquette arrière du véhicule à l'aide de la ceinture de sécurité qui équipe cette banquette, y compris pour des ceintures de sécurité à enrouleurs auto-bloquants.

De tels dispositifs de siège pour enfant connus donnent satisfaction. Cependant, des travaux effectués par la Demanderesse ont montré qu'ils pouvaient être améliorés en ce qui concerne le confort et la sécurité qu'ils assurent aux enfants transportés, leur résistance, leur facilité de montage, leur facilité de fabrication, leur simplicité de mise en oeuvre, ...etc.

C'est par conséquent, un but général de l'invention de fournir des perfectionnements aux dispositifs de siège auto pour enfant permettant d'atteindre les objectifs susmentionnés.

C'est, à cet égard, un but de l'invention de fournir un tel dispositif de siège auto pour enfant dont la résistance aux chocs soit accrue par rapport à celle des dispositifs connus, d'une part, et qui, d'autre part, élimine autant que faire se peut les inconvénients liés au vieillissement de la matière plastique généralement mise en forme, pour ce type de dispositif, par les techniques connues de roto-moulage.

C'est, encore, un but de l'invention de fournir un tel dispositif de siège auto pour enfant dont les possibilités d'emploi soient accrues et qui est propre ainsi à trouver utilisation tant pour le maintien d'un enfant lors d'un trajet en automobile que comme partie de siège auxiliaire indépendamment d'un tel transport, ou encore pour des enfants d'âges et de poids différents.

C'est, également, un but de l'invention de fournir un tel dispositif de siège auto pour enfant particulièrement performant en ce qui concerne sa fixation et son immobilisation sur la banquette arrière d'un véhicule automobile à l'aide de la ceinture de sécurité que comporte celle-ci.

C'est, aussi, un but de l'invention de fournir un tel dispositif de siège auto pour enfant qui garantisse à ce dernier une sécurité de maintien sur le siège auto lui-même encore plus grande que celle qui était obtenue à l'aide des dispositifs connus.

C'est, encore, un but de l'invention de fournir un tel dispositif de siège auto pour enfant facile à manipuler, à mettre en oeuvre, propre à être utilisé sur tous les types de véhicules usuels et qui, en outre, ne déforme pas les banquettes et n'en détériore pas le confort.

C'est, enfin, un but de l'invention de fournir un tel dispositif de siège auto pour enfant par la technique connue de roto-moulage mais qui simplifie cette dernière, en particulier, les moules pour sa mise en oeuvre.

Un dispositif de siège auto pour enfant comportant une coque en matière plastique, un rembourrage de ladite coque formant une surface d'assise, un dossier et des accoudoirs donnant à l'ensemble une structure en "baquet" avec, le cas échéant, un harnais de sécurité pour le maintien de l'enfant sur le dispositif et des moyens de fixation de ce dernier sur un siège comme la banquette arrière d'un véhi cule automobile est caractérisé, selon l'invention, en ce que la coque renferme une armature métallique conformée pour régner au moins dans la zone haute du dossier et à l'avant de la surface d'assise où elle ménage des moyens avec lesquels sont propres à coopérer, respectivement, le brin baudrier et le brin sous-abdominal d'une ceinture de sécurité du véhicule automobile pour l'immobilisation du dispositif sur le siège ou la banquette équipé de ladite ceinture de sécurité.

Selon une autre caractéristique de l'invention, l'armature de la coque est un tube métallique conformé suivant un cadre présentant une ouverture ménagée sans sa zone correspondant à la partie haute du dossier ou le cadre n'est pas noyé dans la coque, mais est en saillie par rapport à la face postérieure de celle-ci, tandis que la partie du cadre qui regne à l'avant de la surface d'assise du dispositif est placée de manière telle qu'elle forme au-dessous de ladite surface d'asise une saillie avec laquelle est propre à coopérer le brin sous-abdominal de ladite ceinture de sécurité.

Selon encore une autre caractéristique de l'invention, le dispositif est constitué complémentairement à la coque qui vient d'être décrite, par une embase qui lui est associable de manière movable et qui ménage, entre deux joues parallèles érigées sur un socle, un espace où peut prendre place une partie de la coque.

Dans une forme de réalisation préférée de l'invention, l'embase est elle aussi en matière plastique et présente un socle de grande surface, qui peut être de l'ordre de 500 x 450 cm.

Ce dimensionnement important du socle permet de ne pas porter atteinte au confort du siège de la banquette sur laquelle est posé le dispositif en raison de la faible pression qu'exerce la large surface du socle de l'embase sur le rembourrage de la banquette, cette surface procu rant, d'autre part, une importante zone d'appui du dispositif sur la banquette, favorable à la stabilité, laquelle est encore accrue, le cas échéant, latéralement et frontalement, en disposant sous la face inférieure du socle de l'embase un tapis de mousse synthétique collé lequel s'oppose aux glissements provoqués par les vibrations du véhicule.

Pour le positionnement de la coque par rapport à l'embase, l'invention prévoit de faire application de nervures ménagées sur la face inférieure externe de la coque par une partie de l'armature métallique noyée dans celle-ci, lesdites nervures étant propres à coopérer avec des gorges de formes conjuguées façonnées de moulage sur la surface supérieure externe de l'embase.

Cette dernière, qui reçoit la coque entre ses joues latérales, est également conformée, de moulage, pour que lesdites joues présentent des découpes permettant le passage du brin sous-abdominal de la ceinture de sécurité lequel, lorsqu'il est mis sous tension par les moyens de réglage habituel que comporte la ceinture, garantit le maintien sûr de l'embase et de l'ensemble du dispositif constitué par la coque et l'embase sur un siège, par exemple la banquette arrière du véhicule équipée de ladite ceinture.

La forme de l'embase, quelque peu semblable à une selle inversée, est avantageusement mise à profit pour servir, en cas de besoin, de rehausse d'un siège usuel.

Dans une réalisation préférée de l'invention, la coque et l'embase sont fabriquées par roto-moulage.

L'invention a également pour objet un procédé de fabrication d'un dispositif de siège auto pour enfant tel que défini ci-dessus qui, faisant application de la technique du roto-moulage, prévoit spécifiquement de mettre en oeuvre cette technique à l'aide de moules dont les demi-coquilles constitutives ont une surface de joint plane dans leur zone de jonction, ce qui en facilite la réalisation, en particulier en ce qui concerne la rectification des pièces venues de fonderie constitutives des demi-coquilles du moule, l'entretien, et par suite, le coût.

On réduit également, ce faisant, l'aire de contact des demi-coquilles constitutives du moule, de sorte que la portée de fermeture plus faible que celle des dispositifs connus permet d'assurer une fermeture satisfaisante du moule avec un effort de serrage moindre que celui requis pour les dispositifs connus.

L'invention sera bien comprise par la description qui suit, faite à titre d'exemple et en référence au dessin annexé dans lequel :

- la figure 1 est une vue très schématique de côté d'un dispositif de siège auto pour enfant selon l'invention;
- la figure 2 est une vue analogue à celle de la figure 1, mais dans laquelle la coque du dispositif repose directement sur une banquette de véhicule ;
- la figure 3 est une vue en perspective, par l'avant, très schématique, du dispositif de siège selon l'invention.

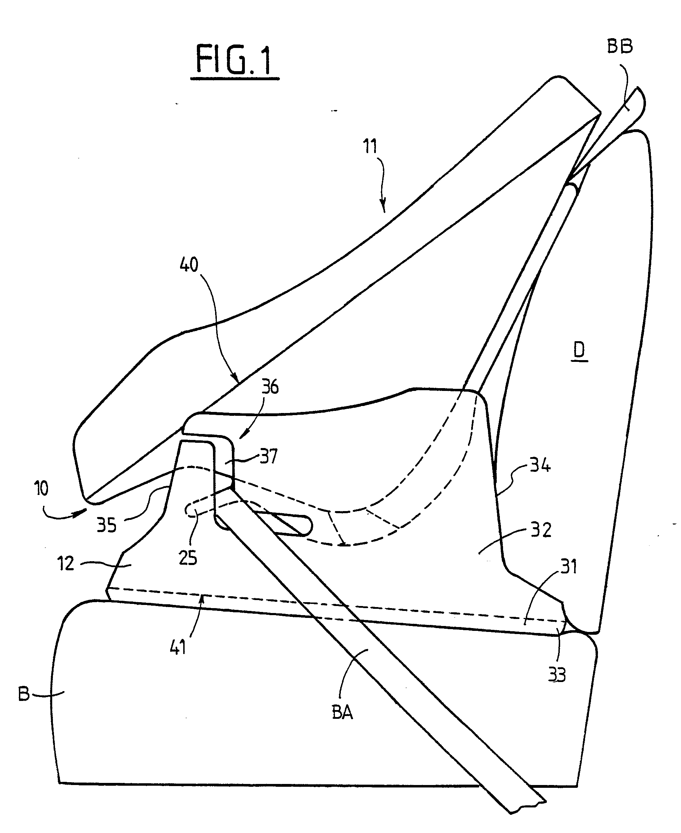

On se réfère d'abord à la figure 1 qui montre un dispositif de siège auto pour enfant selon l'invention constitué par une coque 11 garnie d'un rembourrage et à laquelle peut être associée, de façon amovible, une embase 12 elle aussi en matière plastique, la coque et l'embase étant de préférence, -mais sans que cette indication ait quelque caractère limitatif que ce soit-, réalisées par la même technique de roto-moulage, de sorte que le dispositif de siège selon l'invention ne comporte pas le piètement habituel des sièges connus.

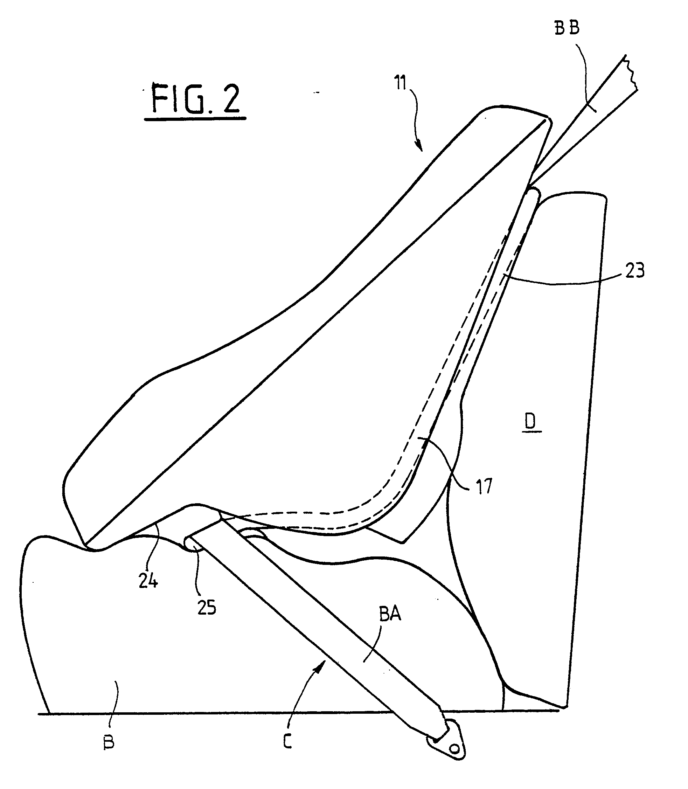

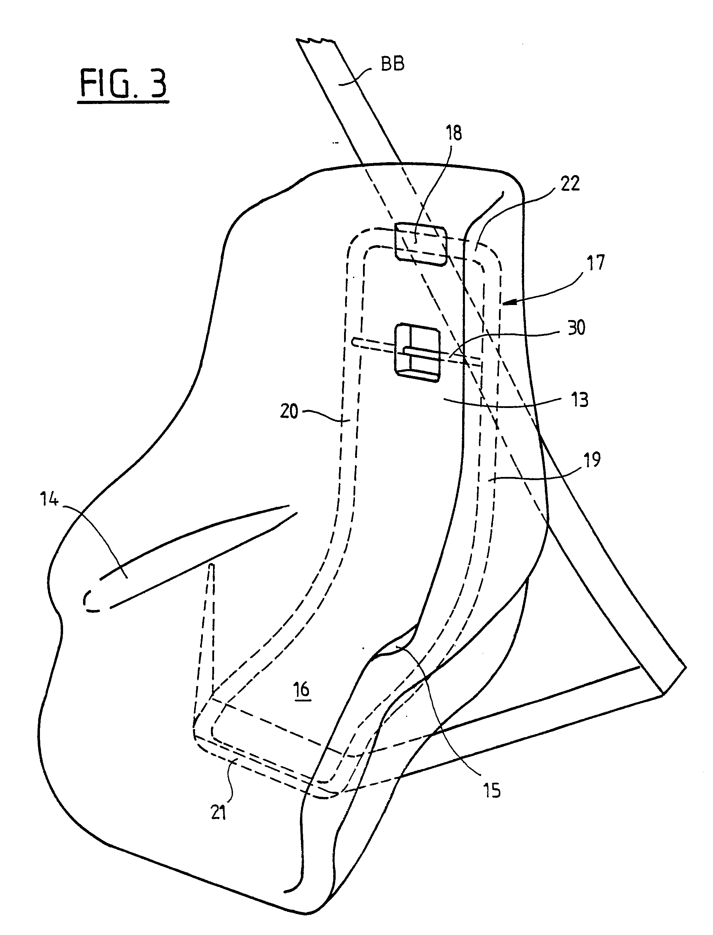

La coque 11, de forme très enveloppante, à dossier 13 de relativement grande hauteur, à larges accoudoirs 14 et 15 et dont l'assise 16 comporte une bosse centrale est munie, selon l'invention, d'une armature métallique 17 (illustrée en tirets sur les figures 2 et 3) et qui est sous forme d'un cadre quasiment fermé, à l'exception d'une légère ouverture 18 dans sa partie supérieure qui est celle du haut du dossier 13. De façon plus précise, l'armature 17 est réalisée par cintrage d'un tube métallique suivant un cadre comportant deux côtés 19 et 20 de grandes dimensions réunis à la partie antéro-frontale de la surface d'assise par un bord 21 et dans la partie haute du dossier par un bord 22, discontinu, pour ménager l'ouverture 18.

En variante, le cadre est totalement fermé et est muni d'une partie rapportée ménageant l'ouverture 18.

Conformément à l'invention, également, le cadre formant l'armature 17 présente un profil correspondant à celui du dossier 13 et de l'assise 16, c'est-à-dire quelque peu suivant un L dont la zone de raccord de la grande et de la petite branche serait arrondie, d'une part, tandis que, d'autre part, le cadre 17 qui est pour sa majeure partie noyé à l'intérieur de la coque est en fait extérieur à ladite coque pour son bord 22 et une légère longueur de ses bords 19 et 20 adjacents au bord 22, comme bien montré sur la figure 2 par la référence 23. Comme bien visible sur cette figure et sur la figure 1 également, le bord antéro-frontal 21 de l'armature 17 fait saillie par rapport à la face externe inférieure 14 de la coque mais sans toutefois être apparent, comme pour la partie 23, la saillie 25 que forme ce bord 21 étant noyée dans la matière plastique constitutive de la coque, ménageant ainsi et sensiblement sur toute la largeur du dispositif de siège une surface d'appui pour le brin sous-abdominal BA d'une ceinture de sécurité C associée au siège ou banquette B du véhicule prévu pour le transport d'un enfant que le dispositif de siège est destiné à protéger.

La présence de l'armature 17, noyée pour sa plus grande partie dans la matière plastique constitutive de la coque 11, assure la solidité mécanique de cette dernière, en procurant notamment une résistance aux chocs permettant de pallier les risques éventuels liés au vieillissement de la matière plastique.

Outre son rôle de fixation du dispositif sur le siège ou banquette B du véhicule, -lequel sera également explicité ci-après en ce qui concerne le brin baudrier BB de la ceinture de sécurité C-, l'armature 17 permet d'accroître la sécurité que procure le harnais, non représenté, qui équipe, le cas échéant, un tel dispositif de siège, et qui comprend outre des bretelles passant au travers de la coque et de son rembourrage par des fentes pour leur accrochage sur une traverse métallique 30 régnant entre les bords 19 et 20 de l'armature, également une ceinture traversant elle aussi la coque et son rembourrage par des fentes pour prendre appui sur la matière plastique entourant l'armature 17 noyée dans la coque, une telle disposition ménageant au droit de ladite armature une zone "tampon" propre à introduire un effet d'amortissement en cas de choc violent, par compression et écrasement de cette matière plastique.

L'embase 12, associée à la coque 11, est constituée par un socle 31 d'où font saillie deux joues 32 délimitant entre elles un espace de forme conjuguée de celui de la partie inférieure de la coque 11 qui peut y être reçue, le positionnement de la coque par rapport à l'embase étant avantageusement défini par coopération des nervures ménagées sur la face postérieure externe de la coque par la matière plastique surmoulée sur les bords 19 et 20 de l'armature 17 avec des gorges de section conjuguée venues de moulage dans la partie de l'embase 12 régnant entre les joues 32 et dont la forme est quelque peu semblable à une selle inversée. Les joues 32, -à contour en élévation de forme générale trapézoïdale avec un nez 33 à la jonction du socle 31 et de leur bord postérieur 34-, sont découpées chacune à partir de leur bord antérieur 35 suivant une fente 36 quelque peu en forme de Z dont la branche centrale 37 est en regard de la saillie 25 de la coque 11 lorsque celle-ci est montée sur l'embase.

Cette dernière, de même que la coque, sont avantageusement réalisées par roto-moulage de matière plastique mais en mettant en oeuvre cette technique à l'aide de moules spécifiques dans lesquels la zone de jonction des demi-coquilles constitutives est plane, comme montré par les traces des plans de joint 40 pour la coquille 11 et 41 pour l'embase 12. Une telle structure des moules permet de faciliter leur réalisation et leur rectification nécessaire en raison des déformations inhérentes à leur mode de fabrication en fonderie et, par suite, d'en réduire le coût. Outre une grande simplicité d'entretien, la portée de faible surface de fermeture des demi-coquilles constitutives du moule permet de faciliter leur fermeture en requérant un effort de serrage moindre que celui habituellement mis en oeuvre dans les dispositifs connus.

Les modes d'utilisation possibles d'un dispositif selon l'invention résultent immédiatement de ce qui précède:

Dans un premier cas, et comme montré sur la figure 1, c'est l'ensemble de la coque 11 et de l'embase 12 qui est placé sur la banquette B d'un véhicule automobile avec le nez 31 de l'embase entre ladite banquette et le dossier D qui lui est associé. Pour le maintien en position relative de la coque et de l'embase d'une part, et de l'ensemble sur la banquette, d'autre part, le brin sous-abdominal BA de la ceinture de sécurité C qui équipe la banquette est passé dans les fentes 36 des joues 32 et sur la saillie 25 de la coque 11, puis serré, avec pour résultat un maintien sûr de la coque sur l'embase et de l'ensemble sur la banquette, d'autant plus performant que ce maintien a lieu à l'avant du dispositif, permettant ainsi d'obtenir une immobilisation satisfaisante même lorsque le dispositif est utilisé sur des voitures dans lesquelles les points d'ancrage du brin sous-abdominal sont placés relativement près du bord avant de la banquette.

Le dispositif est en outre fixé en partie haute de la coque en introduisan le brin baudrier BB de la ceinture de sécurité C dans l'ouverture 18, figure 3, le positionnement dudit brin étant suivi d'une obturation de ladite ouverture par un manchon coulissant. Cette fixation du dispositif au voisinage de l'extrémité haute de la coque, associée à une fixation à la partie avant basse, garantit une grande sécurité de maintien du dispositif sur le siège ou banquette sur lequel il est placé. A cette sécurité contribue encore le fait que la grande surface d'appui du socle 31 de l'embase 12 (qui peut être de l'ordre de 500 x 450 cm) sur la banquette B est avantageusement mise à profit pour accroître la stabilité latérale et frontale du dispositif en associant au socle 31 de l'embase un tapis de mousse synthétique collé sur sa face inférieure et qui interdit tout glissement pouvant être engendré par les vibrations du véhicule.

En outre, la grande surface de contact de l'embase et de la banquette permet de ne pas diminuer le confort de celle-ci en n'exerçant sur le rembourrage de son assise qu'une pression de faible valeur.

Dans un second mode d'utilisation du dispositif, illustré sur la figure 2, la coque 11 est directement posée sur la banquette B par sa face inférieure 24 en reposant par sa face arrière sur le dossier D de la banquette. La fixation à l'aide du brin baudrier est réalisée comme dans le mode d'utilisation décrit ci-dessus tandis que la fixation en partie avant du dispositif est réalisée le plus simplement en faisant passer sur la saillie 25 le brin sous-abdominal BA de la ceinture de sécurité et en serrant ce brin.

Dans un autre mode d'utilisation, non représenté, l'embase 12 sert avantageusement de rehausse d'un siège usuel, tandis que, dans encore un autre mode d'utilisation. l'embase trouve application comme siège de sécurité auto pour enfant, toutefois pour enfants plus agés et de poids plus important que celui des enfants de 9 à 18 kg a qui est destiné l'ensemble du dispositif, ces enfants plus agés, et d'un poids supérieur à 18 kg, étant alors maintenus non plus à l'aide du harnais associé à la coque, mais à l'aide de la ceinture de sécurité à trois points usuelle du véhicule. Dans un tel cas d'utilisation,et pour le confort des enfants qui utilisent l'embase, celle-ci est munie d'un coussin amovible.


**Revendications**

Dispositif de siège auto pour enfant comportant une coque en matière plastique, un rembourrage de ladite coque formant une surface d'assise, un dossier et des accoudoirs donnant à l'ensemble une structure en "baquet" avec, le cas échéant, un harnais de sécurité pour le maintien de l'enfant sur le dispositif et des moyens de fixation de ce dernier sur un support comme la banquette arrière d'un véhicule automobile, caractérisé en ce que la coque (11) renferme une armature métallique (17) conformée pour régner au moins dans la zone haute du dossier (13) et à l'avant de la surface d'assise (16) où elle ménage des moyens (25) avec lesquels sont propres à coopérer, respectivement, le brin baudrier (BB) et le brin sous-abdominal (BA) d'une ceinture de sécurité (C) du véhicule automobile pour l'immobilisation du dispositif (10) sur la banquette (B) équipée de ladite ceinture de sécurité.

2. Dispositif selon la revendication 1, caractérisé en ce que l'armature (17) de la coque (11) est un tube métallique conformé suivant un cadre présentant une ouverture (18) ménagée dans sa zone correspondant à la partie haute du dossier (13) où le cadre n'est pas noyé dans la coque mais est en saillie par rapport à la face postérieure de celle-ci, tandis que la partie dudit cadre qui règne à l'avant de la surface d'assise (16) du dispositif est placée de manière telle qu'elle forme au-dessous de ladite surface d'assise une saillie (25) avec laquelle est propre à coopérer le brin sous-abdominal (BA) de la ceinture de sécurité.

3. Dispositif selon la revendication 1 ou la revendication 2, caractérisé en ce qu'il comprend en outre une embase (12) associée de manière amovible à la coque (11) et qui ménage entre deux joues parallèles érigées sur un socle un espace de réception de la partie inférieure de ladite coque (11).

4. Dispositif selon la revendication 3, caractérisé en ce que l'embase est elle aussi en matière plastique et présente un socle (31) de grande surface, qui peut être de l'ordre de 500 x 450 cm.

5. Dispositif selon la revendication 3 ou 4, caractérisé en ce que le positionnement de la coque (11) par rapport à l'embase (12) fait application de nervures ménagées sur la face inférieure externe (24) de la coque par une partie de l'armature métallique (17) noyée dans celle-ci, lesdites nervures étant propres à coopérer avec des gorges de formes conjuguées façonnées de moulage sur la surface supérieure externe.

6. Dispositif selon l'une quelconque des revendications 3 à 5, caractérisé en ce que l'embase (12) est de forme quelque peu semblable à une selle inversée permettant son utilisation en tant que rehausse de siège usuel.

7. Dispositif selon l'une quelconque des revendications 3 à 6, caractérisé en ce que la coque (11) et l'embase (12) sont fabriquées par roto-moulage.

8. Dispositif selon l'une quelconque des revendications 3 à 7, caractérisé en ce que l'embase (12) est conformée de moulage, pour que ses joues (32) présentent des découpes (36) permettant le passage du brin sous-abdominal (BA) de la ceinture de sécurité lequel, lorsqu'il est mis sous tension par les moyens de réglage habituel que comporte la ceinture, garantit le maintien sûr de l'embase et de l'ensemble du dispositif constitué par la coque et l'embase sur un siège, par exemple la banquette arrière (B) du véhicule équipée de ladite ceinture.

9. Dispositif selon la revendication 4, caractérisé en ce que la face inférieure du socle (31) de l'embase (12) comporte un tapis de mousse synthétique collé lequel s'oppose aux glissements provoqués par les vibrations du véhicule.

10. Procédé de fabrication d'un dispositif de siège auto pour enfant selon l'une quelconque des revendications précédentes, caractérisé en ce que faisant application de la technique du roto-moulage, on prévoit de mettre en oeuvre cette technique à l'aide de moules dont les demi-coquilles constitutives ont une surface de joint plane dans leur zone de jonction.

FIG.1

# FIG. 2

FIG. 3

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-323334 (BABY) <br> * colonne 3, ligne 57 - page 4, ligne 56; figures 1-7 * <br> --- | 1 | B60N2/28 |
| A | DE-U-8808637 (CONCORD) <br> * page 9, ligne 9 - page 10, ligne 7; figures 1-10 * <br> * page 11, ligne 29 - page 12, ligne 18 * <br> --- | 1, 2, 3, 6 | |
| A | DE-A-2545915 (CORRIDORI) <br> * page 3, ligne 7 - page 4, ligne 17; figures 1-5 * <br> --- | 1 | |
| A | FR-A-2417384 (AMPAFRANCE) <br> * page 2, ligne 32 - page 5, ligne 9; figures 1-8 * <br> ----- | 1, 10 | |

|  | DOMAINES TECHNIQUES RECHERCHES (Int. Cl.5 ) |
|---|---|
|  | B60N <br> B60R <br> A47D |

Le présent rapport a été établi pour toutes les revendications

| Lieu de la recherche | Date d'achèvement de la recherche | Examinateur |
|---|---|---|
| LA HAYE | 27 AOUT 1990 | HORVATH R. |